# EUROPÄISCHE PATENTSCHRIFT

(11) **EP 1 974 841 B1**
(45) Veröffentlichungstag und Bekanntmachung des Hinweises auf die Patenterteilung: **17.12.2008**
(21) Anmeldenummer: 07006299.7
(22) Anmeldetag: 27.03.2007
(51) Int. Cl.: B23B 31/14, B23B 31/16, B23Q 11/10

(54) **Spannfutter**
Collet chuck
Mandrin

(43) Veröffentlichungstag der Anmeldung: 01.10.2008
(73) Patentinhaber: Schunk GmbH & Co. KG Spann- und Greiftechnik, 74348 Lauffen (DE)
(72) Erfinder: Gross, Johann, 74081 Heilbronn (DE); Buth, Alexander, 88518 Hundersingen (DE)
(74) Vertreter: Paul, Dieter-Alfred

(56) Entgegenhaltungen:
- EP-A1- 0 865 853
- DE-A1-8102005 041 51
- DE-C1- 10 213 021

## Beschreibung

Die vorliegende Erfindung betrifft ein Spannfutter mit einem Futterkörper und Spannbacken, die in radialen Bakkenführungen des Futterkörpers verstellbar angeordnet sind, wobei in dem Futterkörper Taschen ausgebildet sind, in denen Förderelemente radial bewegbar geführt sind, und Mittel vorgesehen sind, um Schmiermittel, das sich in den Taschen sammelt, durch die Radialbewegung der Förderelemente in Schmierbohrungen und über diese zu gewünschten Schmierstellen zu pumpen, wobei in dem Futterkörper Schmiermittel-Reservoirbohrungen ausgebildet sind, die in Futterachsrichtung verlaufen mit den Taschen verbunden sind.

Spannfutter dieser Art sind beispielsweise aus der DE 10 2005 041 518 A1 bekannt und werden in der Praxis in erster Linie eingesetzt, um an Drehmaschinen die zu bearbeitenden Werkstücke zu spannen. Die herkömmlichen Spannfutter sind dabei nach Art eines Dreibackenfutters ausgebildet und besitzen drei Spannbacken, die in entsprechenden radialen Backenführungen des Futterkörpers angeordnet sind. Die Führung der Spannbacken in den Backenführungen erfolgt über entsprechende Führungsnuten und Führungsleisten, die an den Seitenflächen der Spannbacken sowie der Backenführungen ausgebildet sind.

Ein Problem, das bei herkömmlichen Spannfuttern häufig auftritt, besteht darin, dass mit zunehmender Umfangsgeschwindigkeit hohe Fliehkräfte auftreten, die dazu führen, dass die an sich vorgespannten Spannbacken nach außen gezogen werden und es somit zu einer Verringerung der Spannkraft kommt. Aus diesem Grund erfolgt bei dem aus der DE 10 2005 041 518 A1 vorbekannten Spannfutter ein Fliehkraftausgleich über Fliehkraft-Ausgleichsgewichte, die jeweils unterhalb einer zugehörigen Spannbacke im Futterkörper verstellbar angeordnet und mit der Spannbakke über einen Spannhebel, der sich im Futterkörper schwenkbeweglich abstützt und an seinem einen Ende in einer Führungsausnehmung des Ausgleichsgewichts und mit seinem zweiten Ende in einer Führungsausnehmung der Spannbacke ruht, verbunden ist. Beim Auftreten von Fliehkräften wird der Spannhebel durch das Ausgleichsgewicht nach außen gezogen und überträgt gleichzeitig eine der Fliehkraft des Ausgleichsgewichts entgegenwirkende Kraft auf die Spannbacke, welche demzufolge nachgespannt wird.

Bei dem bekannten Spannfutter werden die radialen Bewegungen, welche die Fliehkraft-Ausgleichsgewichte bei einer Verstellung der Spannbacken ausführen, außerdem genutzt, um Schmierfett, welches im Betrieb durch die auftretenden Fliehkräfte aus den Backenführungen verdrängt wird und sich in den Taschen der Fliehkraft-Ausgleichsgewichte sammelt, durch entsprechende Schmiermittelkanäle in den Bereich der Gleitflächen zwischen den Spannbacken und dem Futterkolben zu pumpen, wenn die Fliehkraft-Ausgleichsgewichte bei einer Verstellung der Spannbacken nach innen radial nach außen verstellt werden und sich damit der radial äußere Bereich der Taschen verkleinert.

Zusätzlich sind in dem Futterkörper Schmiermittel-Reservoirbohrungen vorgesehen, die mit dem Schmiermittel gefüllt und mit den Taschen derart verbunden sind, dass in den Schmiermittel-Reservoirbohrungen gespeichertes Schmiermittel durch die im Betrieb auftretenden Flieh- und Verzögerungskräfte in die Taschen gefördert wird.

Die bekannten Spannfutter haben sich in der Praxis durchaus bewährt. Es hat sich jedoch im Dauertest gezeigt, dass durch die hohen Fliehkräfte insbesondere in den Schmiermittel-Reservoirbohrungen eine zentrifugale Auftrennung des Schmiermittels in seine Mineralöl- und Zusatzstoff-Phasen stattfindet. Am Ende des Dauertests waren die Schmiermittel-Reservoirbohrungen noch teilweise gefüllt, jedoch hatten sich die festen Bestandteile im radial äußeren Bereich der Schmiermittel-Reservoirbohrungen abgesetzt und die Mineralölphase im radial inneren Bereich.

Aufgabe der Erfindung ist es daher, ein Spannfutter der eingangs genannten Art so auszubilden, dass ein Aushärten des Schmiermittels zuverlässig verhindert wird.

Diese Aufgabe ist erfindungsgemäß dadurch gelöst, dass in den Schmiermittel-Reservoirbohrungen jeweils wenigstens ein Rührkörper untergebracht ist, welcher derart angeordnet und/oder ausgebildet ist, dass er während des Betriebs Bewegungen ausführt, um das in der jeweiligen Schmiermittel-Reservoirbohrung enthaltene Schmiermittel umzurühren.

Der erfindungsgemäß vorgesehene Rührkörper bewegt sich durch die im normalen Betrieb des Spannfutters auftretenden Beschleunigungs- und Verzögerungsvorgänge und rührt dabei das in den Schmiermittel-Reservoirbohrungen enthaltene Schmiermittel um, wodurch eine Auftrennung des Schmiermittels in seine Bestandteile verhindert werden kann.

Gemäß einer Ausführungsform der Erfindung ist vorgesehen, dass der Rührkörper als eine in die Schmiermittel-Reservoirbohrung eingesetzte Schraubenfeder ausgebildet ist. Dabei kann es sich um eine übliche Druckfeder handeln, die ohne besondere Vorspannung in die Schmiermittel-Reservoirbohrungen eingesetzt ist. Die Schraubenfeder sollte dabei kleiner sein als die Schmiermittel-Reservoirbohrung, so dass sie sich in ihr frei bewegen kann. Es hat sich als vorteilhaft erwiesen, wenn der Außendurchmesser der Schraubenfeder um etwa 25% kleiner als der Durchmesser der Schmiermittel-Reservoirbohrung ist. Dabei kann die Länge der Schraubenfeder so bemessen sein, dass sie im ungespannten Zustand geringer als die Länge der Schmiermittel-Reservoirbohrung ist, so dass sich die Schraubenfeder innerhalb der Schmiermittel-Reservoirbohrung frei bewegen kann. Die Schraubenfeder kann jedoch auch etwas länger als die Schmiermittel-Reservoirbohrung sein. Es sollte jedoch sichergestellt werden, dass die Länge so bemessen ist, dass die Schraubenfeder bei der Montage nur geringfügig zusammengestaucht wird, um die freie Bewegung der Schraubenfeder innerhalb der Schmiermittel-Reservoirbohrung nicht zu beeinträchtigen.

Bei den im normalen Betrieb des Spannfutters auftretenden Beschleunigungs- und Verzögerungsvorgängen wälzt sich die Schraubenfeder in tangentialer Richtung innerhalb der Schmiermittel-Reservoirbohrung ab und sorgt mit ihrer Vielzahl von Windungen in der gesamten axialen Erstrekkung der Schraubenfeder für eine Durchmischung des Schmiermittels.

Dabei können an den axialen Enden der Schmiermittel-Reservoirbohrungen jeweils Führungsdorne vorgesehen sein, auf welche die Schraubenfeder aufgesetzt ist. In diesem Fall liegen die Achsen der Schraubenfeder und der Schmiermittel-Reservoirbohrung deckungsgleich. Durch die im Betrieb auftretenden Fliehkräfte wird die Schraubenfeder bauchförmig nach außen gewölbt, und nach Abklingen der Fliehkräfte nimmt diese Wölbung wieder ab, wodurch der Durchmischungseffekt erzielt wird.

In weiterer Ausgestaltung des erfindungsgemäßen Spannfutters ist vorgesehen, dass die Schmiermittel-Reservoirbohrung an ihrem oberen und/oder unteren Ende eine ebene Fläche bildet, an der sich die Schraubenfeder abstützt. Alternativ kann die Schmiermittel-Reservoirbohrung an ihren gegenüber liegenden Enden Konusflächen aufweisen, an welchen sich die Schraubenfeder abstützt. Bei dieser Ausführungsform wird die Schraubenfeder mit Vorspannung in die Schmiermittel-Reservoirbohrung eingesetzt, wobei sich die Federendwindungen an den Konusflächen abstützen und die Mittelachse der Schraubenfeder parallel zur Achse der Reservoirbohrung drücken. Unter Fliehkraftwirkung wandert die Mittelachse der Schraubenfeder nach außen und kehrt nach Abklingen der Fliehkraft wieder zurück.

Gemäß einer alternativen Ausführungsform ist vorgesehen, dass der Rührkörper durch mehrere in die Schmiermittel-Reservoirbohrung eingesetzte Stahlkugeln gebildet ist, die einen kleineren Durchmesser als die Schmiermittel-Reservoirbohrung besitzen. Auch kann der Rührkörper als ein Zylinderstift ausgebildet sein, der sich im wesentlichen über die gesamte Länge der Schmiermittel-Reservoirbohrung erstreckt.

In an sich bekannter Weise können die Schmiermittel-Reservoirbohrungen an ihren radial äußeren Seiten geneigte Außenflächen aufweisen, die zur Trennstelle zwischen dem Futterkörper und dem Deckel radial nach außen hin geneigt sind. Durch diese Neigung besitzt der Rührkörper, insbesondere die Schraubenfeder die Möglichkeit, sich an den geneigten Außenwindungen anzulegen. Nach Abklingen der Fliehkraft kehrt die Schraubenfeder in ihre unverformte Gestalt zurück und sorgt mit dieser Bewegung ebenfalls für die Durchmischung des Schmierstoffes.

Im übrigen können die Taschen und die Schmiermittel-Reservoirbohrungen über einen umlaufenden Ringkanal, der insbesondere im Bereich der Trennstelle zwischen dem Futterkörper und dem Deckel verlaufen kann, miteinander in Verbindung stehen. In diesem Fall wird Schmiermittel, welches in den Schmiermittel-Reservoirbohrungen enthalten ist, durch die im Betrieb auftretenden Fliehkräfte in axialer Richtung zu dem Ringkanal und von dort in die Taschen transportiert.

In weiterer Ausgestaltung des erfindungsgemäßen Spannfutters können auch Schmiermittelkanäle vorgesehen sein, welche die zentrale Aufnahme des Spannfutters mit den Schmiermittel-Reservoirbohrungen verbinden. Auf diese Weise kann das von den Förderelementen in den radial inneren Bereich des Spannfutters gepumpte Schmiermittel durch die im Betrieb auftretenden Zentrifugalkräfte wieder zurück in die Schmiermittel-Reservoirbohrungen gelangen, so dass ein geschlossener Schmierkreislauf erzielt wird. So wird eine bessere Durchmischung des Schmiermittels erhalten, da jetzt alle Bereiche, in denen sich Fett befindt, miteinander verbunden sind und am Schmierkreislauf teilnehmen.

Weiterhin kann vorgesehen sein, dass Schmiermittelkanäle in die seitlichen Wandungen der Taschen, an denen die Förderelemente geführt sind, münden, wobei die Förderelemente und die Taschen insbesondere so ausgebildet sind, dass sie einen zur Öffnung des Schmiermittelkanals zulaufenden Führungsspalt bilden. Durch diese Ausgestaltung wird erreicht, dass auch das Schmiermittel, welches sich an den radial inneren Bereichen der Taschen sammelt, automatisch in die Schmiermittel-Reservoirbohrungen zurückgefördert wird.

Gemäß einer Ausführungsform der Erfindung ist vorgesehen, dass in jeder Tasche wenigstens ein Pumpkolben vorgesehen ist, der in einer Zylinderbohrung des in der Tasche bewegbaren Förderelements unter Bildung eines dazwischenliegenden Kolbenraums angeordnet und derart in der Tasche gehalten ist, dass das Förderelement sich bei seinen Radialbewegungen relativ zu dem Pumpkolben unter Verkleinerung bzw. Vergrößerung des Kolbenraums bewegt, dass der Pumpkolben mit einem radial äußeren, rohrförmigen Endabschnitt das Förderelement durchgreift und in den radial äußeren Bereich der Tasche hineinragt, wobei der rohrförmige Endabschnitt über einen Verbindungskanal mit dem Kolbenraum verbunden ist, dass in dem Pumpkolben ein erstes Rückschlagventil vorgesehen ist, das einen Fluidstrom von der Tasche durch den rohrförmigen Endabschnitt und den Verbindungskanal in den Kolbenraum zulässt, einen Schmiermittelstrom in die entgegengesetzte Richtung jedoch sperrt, und dass der Kolbenraum mit einer Schmierbohrung des Futterkörpers durch ein in dem Förderelement ausgebildeten Auslasskanal verbunden ist und ein zweites Rückschlagventil vorgesehen ist, das einen Schmiermittelstrom von der Kolbenkammer zu dem Schmiermittelkanal erlaubt, jedoch ein Zurückströmen von Schmiermittel in der entgegengesetzten Richtung verhindert.

Dieser Ausführungsform liegt die Überlegung zugrunde, ein Pumpsystem vorzusehen, um die Förderung von Schmiermittel aus den Taschen hin zu den zu schmierenden Gleitflächen, welche primär durch die Verdrängungswirkung des sich in der Tasche nach außen bewegenden Förderelements bewirkt wird, zu unterstützen. Das Pumpsystem wird im wesentlichen gebildet von einem Pumpkolben, der insbesondere ortsfest an der radial inneren Taschenwandung gehalten wird und unter Bildung eines Kolbenraums in die Zylinderbohrung des Förderelements eingreift. Wenn das Förderelement radial nach außen bewegt wird, erfolgt diese Radialbewegung relativ zu dem feststehenden Pumpkolben, so dass sich der Kolbenraum vergrößert und entsprechend in ihm ein Unterdruck einstellt mit der Folge, dass Schmiermittel aus der Tasche durch den rohrförmigen Endabschnitt des Pumpkolbens in den Kolbenraum gesaugt wird. Dabei verhindert das zweite Rückschlagventil, dass auch Schmiermittel oder Luft aus den Schmierbohrungen des Futterkörpers angesaugt wird. Wenn das Förderelement radial nach innen bewegt wird, führt dies zu einer Verkleinerung des Kolbenraums mit der Folge, dass das darin befindliche Schmiermittel über das zweite Rückschlagventil in die Schmiermittelbohrungen und über diese zu den zu schmierenden Gleitflächen gedrückt wird. Dabei verhindert das erste Rückschlagventil ein Zurückströmen von Schmiermittel in die sich vergrößernde Tasche. Im Ergebnis wird eine zufriedenstellende Schmierung gewährleistet, auch wenn die Taschen nicht vollständig mit Schmiermittel gefüllt sind.

Von Vorteil ist weiterhin, dass die Position der Ansaugöffnung des rohrförmigen Endstücks des Pumpkolbens unabhängig von der Position des Förderelements in der Tasche ist. Da der Pumpkolben sich nicht bewegt, kann das Einlassende des Pumpkolbens bis an die Außenwand der Tasche heranreichen, d.h. in einem Bereich, in dem sich auch dann noch Schmiermittel befindet, wenn die Tasche nur teilweise gefüllt ist.

Wenn die Förderelemente frei radial verschieblich in den Taschen gelagert sind, werden sie durch die auftretenden Zentrifugalkräfte automatisch nach außen gedrückt. In diesem Fall sind Rückstelleinrichtungen beispielsweise in der Form von Rückstellfedern vorgesehen, um sie in eine innere Ausgangsstellung zurückzubringen, wenn das Futter nicht rotiert wird.

In an sich bekannter Weise können die Förderelemente auch Fliehkraft-Ausgleichsgewichte sein, die mit den Spannbakken über Hebel gekoppelt sind.

Gemäß einer Ausführungsform der Erfindung ist vorgesehen, dass der Pumpkolben durch eine Schraubendruckfeder, die in dem Kolbenraum angeordnet ist und sich zwischen dem Pumpkolben und dem Förderer abstützt, gegen die radial innere Wandung der Tasche gedrückt wird. Hierdurch wird auf einfache Weise sichergestellt, dass der Pumpkolben an der Innenwandung der Tasche gehalten wird.

Dabei kann das erste Rückschlagventil, welches ein Zurückströmen von Schmiermittel in die Tasche verhindert, in einer axialen Bohrung des Pumpkolbens untergebracht sein. In diesem Fall weist das Rückschlagventil zweckmäßigerweise eine Kugel als Ventilelement auf, die durch eine Schraubenfeder gegen einen Sitz gedrückt wird.

Um sicherzustellen, dass das geförderte Schmiermittel unabhängig von der Stellung des sich nach innen bewegenden Förderelements in die Schmierbohrung des Futterkörpers gelangt, ist gemäß einer weiteren Ausführungsform vorgesehen, dass der Auslasskanal in eine radiale Übergabenut, die an der Oberseite des Fliehkraft-Ausgleichsgewichts und/oder der damit in Kontakt kommenden Fläche des Futterkörpers ausgebildet ist, mündet. Dabei kann der Auslasskanal tangential an den Kolbenraum anschließen und sich insbesondere in Futterachsrichtung erstrecken.

Auch können in jeder Tasche zwei Pumpkolben symmetrisch zur Mittelachse des Förderelements angeordnet sein. Diese Ausgestaltung hat den Vorteil, dass Unwuchten vermieden werden und des weiteren die Pumpsysteme in dem Fall, dass die Förderelemente als Fliehkraft-Ausgleichs-gewichte ausgebildet sind, nicht mit dem Hebel, über welchen das Fliehkraft-Ausgleichsgewicht mit der zugehörigen Spannbacke gekoppelt ist, kollidieren. Außerdem ist es möglich, über die beiden Pumpsysteme parallel zueinander zwei korrespondierende Gleitflächen mit Schmiermittel zu versorgen.

Weiterhin kann in die zentrale Aufnahme des Spannfutters eine Schutzbüchse eingesetzt sein, welche zur Vorderseite des Futterkörpers hin konisch auseinanderlaufend ausgebildet ist. Auf diese konische Fläche auftropfendes Kühlwasser wird aufgrund des durch die Konizität entstehenden Gefälles in Verbindung mit der Zentrifugalkraft der Drehbewegung axial nach vorne zum Futtergesicht gefördert. Hierdurch kann ein großer Teil der sich im Wasser befindlichen Schmutzpartikel wieder nach vorne ausgeschwemmt werden. Außerdem können Dichtungen vorgesehen sein, um ein Eintreten von Kühlflüssigkeit von dem Bereich der Aufnahme in den Futterkörper zu verhindern und auf diese Weise Auswaschungen zu vermeiden.

Schließlich können in den Backenführungen radiale Ablaufnuten ausgebildet sein, durch welche Kühlmittel, das in den zwischen den Spannbacken und den Backenführungen gebildeten Spalt eindringt, radial aus dem Futterkörper herausgeleitet wird, ohne in den Bereich der miteinander in Eingriff stehenden Führungsleisten bzw. Führungsnuten von Spannbacke und Backenführung zu gelangen.

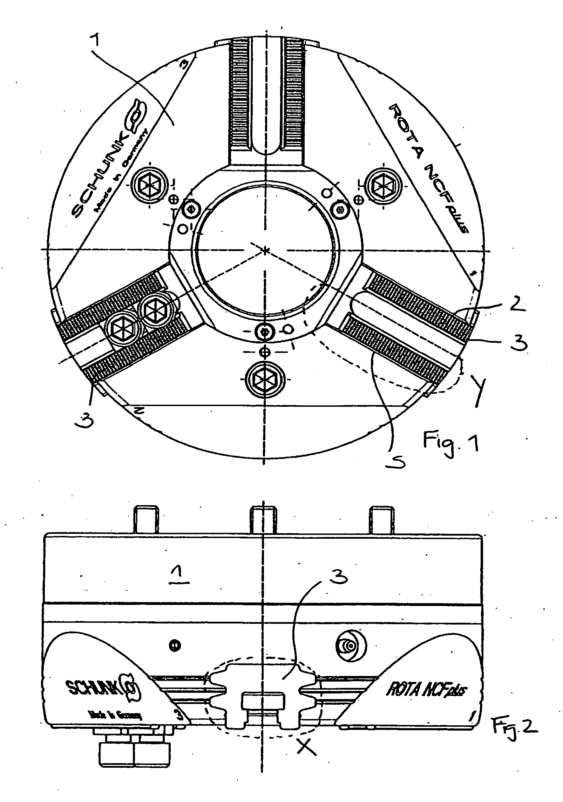

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: ein Spannfutter gemäß der vorliegenden Erfindung in Vorderansicht,
- Figur 2: das Spannfutter aus Figur 1 in Seitenansicht,

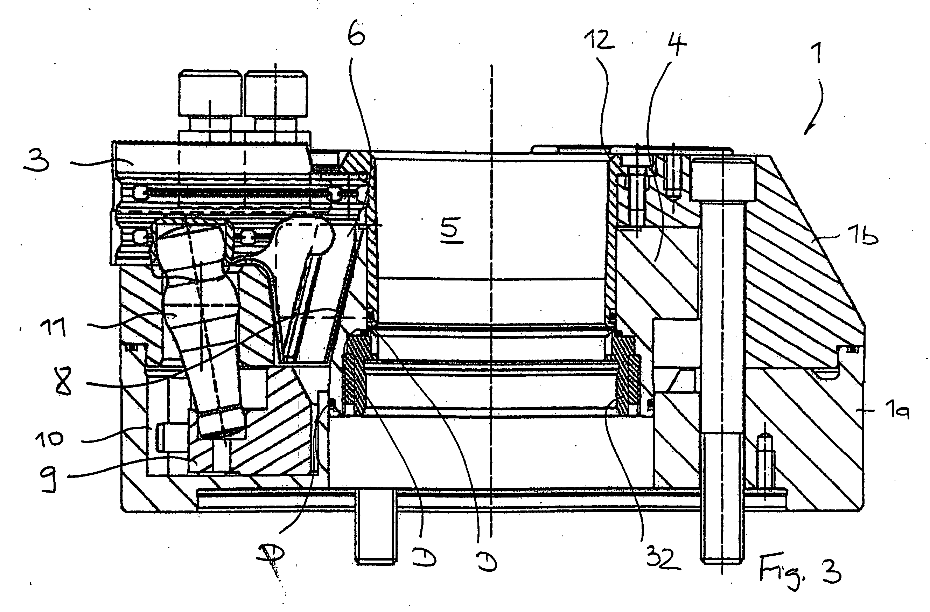

- Figur 3: das Spannfutter aus Figur 1 im Schnitt entlang der Linie III-III aus Figur 1,
- Figur 4: das Spannfutter aus Figur 1 im Schnitt entlang der Linie IV-IV aus Figur 2,
- Figur 5a: das Spannfutter aus Figur 4 im Schnitt entlang der Linie C-C, mit einer eingesetzten Schraubenfeder,
- Figur 5b: das Spannfutter aus Figur 5a mit einer alternativen Ausgestaltung der SchmiermittelReservoirbohrung,
- Figur 5c: das Spannfutter aus Figur 4 mit einer zweiten alternativen Ausführungsform der SchmiermittelReservoirbohrung,
- Figur 6: das Spannfutter aus Figur 4 im Schnitt entlang der Linie G-G,
- Figur 7: das Spannfutter aus Figur 4 im Schnitt entlang der Linie B-B,
- Figur 8: das Spannfutter aus Figur 4 im Schnitt entlang der Linie H-H,

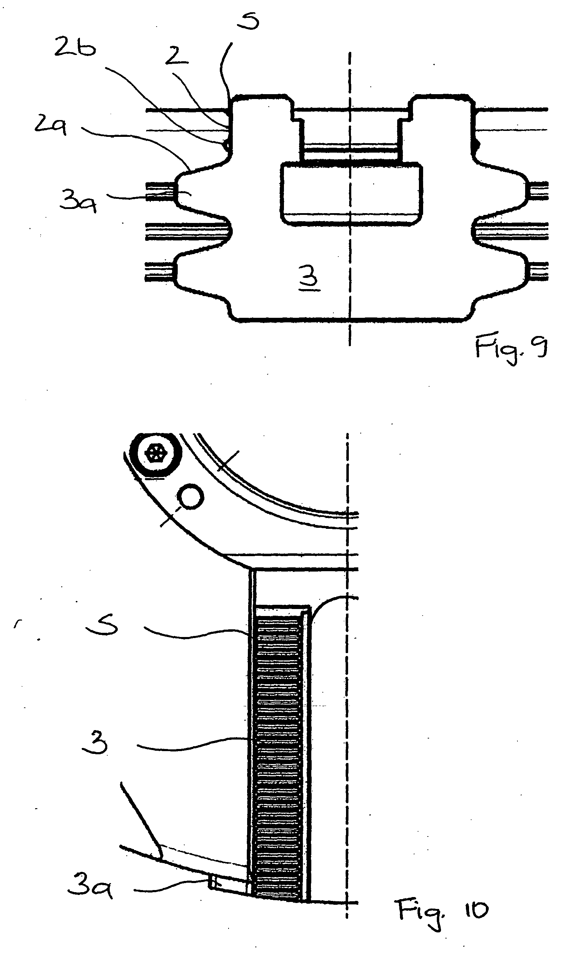

- Figur 9: den Ausschnitt X aus Figur 2 in vergrößerter Darstellung,
- Figur 10: den Ausschnitt Y aus Figur 1 in vergrößerter Darstellung, und
- Figur 11: in perspektivischer Darstellung den Futterkörper mit abgenommenem Deckel und
- Figur 12: das Spannfutter aus Figur 1 im Schnitt entlang der Linie XI-XI in Figur 2.

In den Figuren ist ein Kraftspannfutter gemäß der vorliegenden Erfindung dargestellt, das beispielsweise zum Spannen von Werkstücken an Drehmaschinen eingesetzt werden kann. Zu dem Spannfutter gehört ein Futterkörper 1, der axial unterteilt ist in einen Grundkörper 1a und einen Deckel 1b und eine zylindrische Grundform besitzt, und an der nicht dargestellten Spindel beispielsweise einer Drehmaschine festgeschraubt werden kann. In der einen, vorderen Stirnseite des Futterkörpers 1 sind radiale Backenführungen 2 vorgesehen, die gleichmäßig über den Umfang verteilt, d.h. mit jeweils 120° Versatz gegeneinander angeordnet sind. In die Backenführungen 2 sind Spannbacken 3 eingesetzt, die jeweils aus einer Grundbakke und einer daran aufschraubbaren Aufsatzbacke bestehen, wobei in der Zeichnung nur die Grundbacke dargestellt ist. Um die beim Spannen von Werkstücken unter Bearbeitung auftretenden Kräfte aufnehmen zu können, sind an den Seitenflächen der Spannbacken 3 und der Backenführungen 2 jeweils Führungsleisten 3a und damit in Eingriff stehende Führungsnuten 2a ausgebildet. Konkret sind an jeder Seitenfläche der Spannbacken 3 jeweils zwei Führungsleisten 3a trapezförmigen Querschnitts und in den Backenführungen 2 entsprechende Führungsnuten 2a ausgebildet. Des weiteren sind im Bereich der Backenführungen 2 zwischen den Führungsnuten 2a und der vorderen Stirnseite des Futterkörpers 1 radiale Ablaufnuten 2b ausgebildet. Diese dienen dazu, Kühlmittel, das in den zwischen den Spannbacken 3 und den Backenführungen 2 gebildeten Spalt von der vorderen Stirnseite des Futterkörpers 1 her eindringt, radial aus dem Futterkörper 1 herauszuleiten, ohne dass es in den Bereich der miteinander in Eingriff stehenden Führungsleisten 3a bzw. Führungsnuten 2a von Spannbacke 3 und Backenführung 2 gelangen kann.

In an sich bekannter Weise ist in die zentrale Aufnahme 5 des Spannfutters eine Schutzbüchse 12 eingesetzt. Die Schutzbüchse 12 ist zur Vorderseite des Futterkörpers 1 konisch auseinanderlaufend ausgebildet, so dass auf sie auftropfendes Kühlwasser aufgrund des durch die Konizität entstehenden Gefälles in Verbindung mit der Zentrifugalkraft der Drehbewegung axial nach vorne zum Futtergesicht gefördert wird. Hierdurch kann ein großer Teil der sich im Wasser befindlichen Schmutzpartikel wieder nach vorne ausgeschwemmt werden. Außerdem sind Dichtungen D vorgesehen, um ein Eintreten von Kühlflüssigkeit aus dem Bereich der Aufnahme in den Futterkörper 1 zu verhindern und auf diese weise Auswaschungen zu vermeiden.

Außerdem sind Dichtungen D zwischen der Schutzbüchse 12 und dem Kolben 4, zwischen einer in die Aufnahme 5 von der hinteren Futterseite her eingeschraubten Zugbüchse 32 und dem Kolben 4 sowie zwischen dem Kolben 4 und der Aufnahme 5 vorgesehen, um das Eindringen von Kühlmittel in den Futterkörper 1 zu verhindern.

Die radiale Verstellung der Spannbacken 3 erfolgt durch einen Spannkolben 4, der in der zentralen Bohrung bzw.

Aufnahme 5 des Futterkörpers 1 in axialer Richtung verschiebbar und durch hydraulische oder mechanische Antriebsmittel betätigbar ist. Der Spannkolben 4 ist mit den Grundbacken 3 über eine Keilhakenkopplung verbunden, wie sie an sich bekannt ist. Hierzu sind an den radial nach innen weisenden Enden der Grundbacken 3 jeweils T-förmige Keilhaken 6 ausgebildet, die in entsprechende T-förmige Keilnuten 7 des Spannkolbens 4 eingreifen. Die Keilhaken 6 und Keilnuten 7 weisen Keilflächen 8 auf, die im spitzen Winkel zur Futterkörperachse liegen und in der Weise miteinander zusammenwirken, dass eine Axialverstellung des Spannkolbens 4 in eine synchrone Radialbewegung der Grundbacken 3 umgesetzt wird.

Um die bei hohen Drehzahlen des Spannfutters auf die Spannbacken 3 einwirkenden Fliehkräfte zu beseitigen bzw. zu verringern, sind insgesamt drei Fliehkraft-Ausgleichsgewichte 9 vorgesehen. Jeder Spannbacke 3 ist ein derartiges Ausgleichsgewicht 9 zugeordnet, wobei das Ausgleichsgewicht 9 mittig hinter bzw. unterhalb der Spannbacke 3 in einer Tasche 10 des Futterkörpers 1 radial verschiebbar angeordnet und über einen im Futterkörper 1 abgestützten Hebel 11 mit der zugehörigen Spannbacke 3 verbunden ist. Die Zeichnung zeigt, dass der Hebel 11 mit einem vorderen Ende in eine Ausnehmung 3b der Spannbacke 3 eingreift, wohingegen sein hinteres Ende beweglich im Fliehkraft-Ausgleichsgewicht 9 angeordnet ist. Wenn im Betrieb auf die Spannbacke 3 radial nach außen gerichtete Fliehkräfte wirken, werden diese durch entsprechende Kräfte kompensiert, die aufgrund der auf die Ausgleichsgewichte 9 wirkenden Fliehkräfte die Hebel 11 belasten, so dass diese wiederum die Spannbacken 3 in zentipedaler Richtung belasten. Auf diese Weise kann zumindest ein Großteil der auf die Spannbacken 3 einwirkenden Fliehkräfte kompensiert werden.

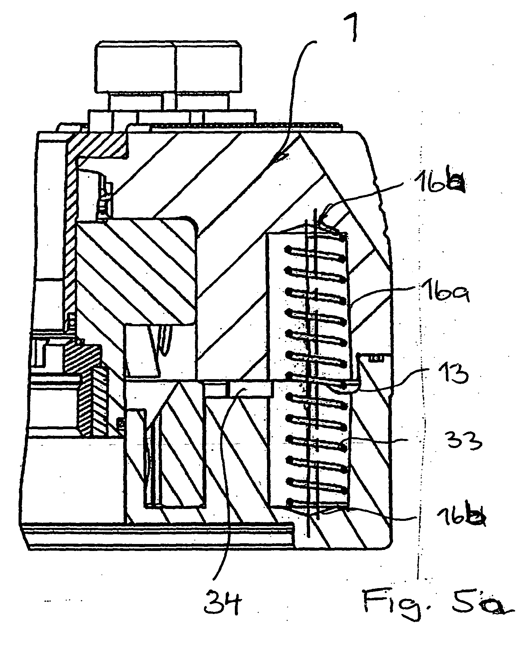

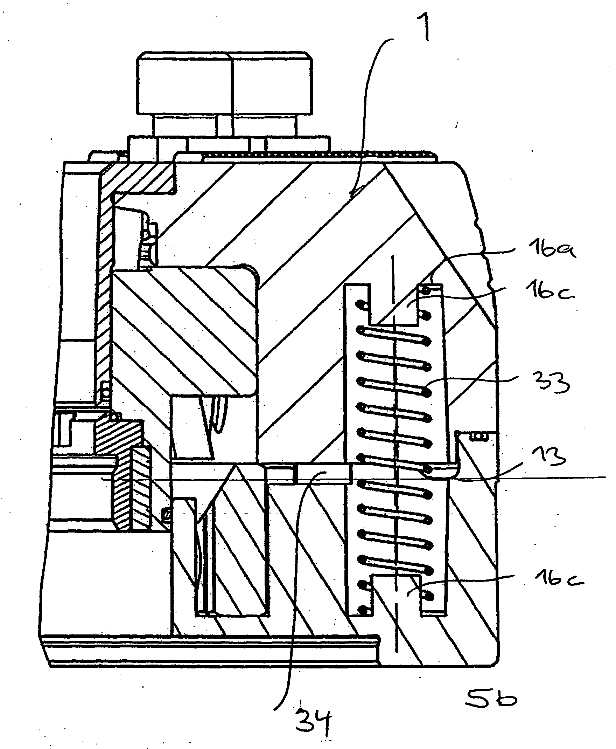

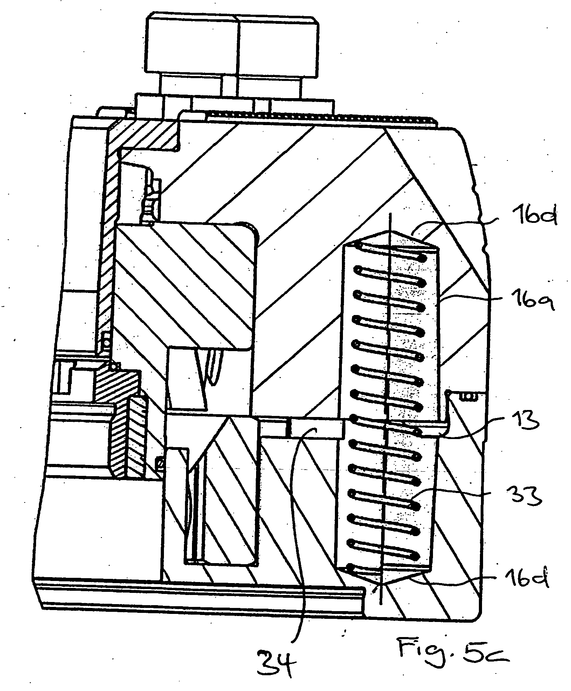

Die für die Fliehkraft-Ausgleichsgewichte 9 vorgesehenen Taschen 10 im Futterkörper 1 sind miteinander durch einen in dem Futterkörper 1 ausgebildeten Ringkanal 13, der hier als umlaufende Ringnut in der zum Deckel 1b weisenden Stirnfläche des Grundkörpers 1a ausgebildet und durch den Deckel 1a verschlossen ist. In dem Futterkörper 1 sind weiterhin mehrere Schmiermittel-Reservoirbohrungen 16 ausgebildet, die wie insbesondere in der Figur 5 gut erkennbar ist, in dem Grundkörper 1a sowie dem Deckel 1b ausgebildet sind und sich in Futterachsrichtung erstrekken. Die Schmiermittel-Reservoirbohrungen 16 weisen in ihren radial äußeren Bereich geneigte Außenflächen 16a auf, die zum Ringkanal 13 nach außen geneigt sind" so dass gespeichertes Schmiermittel durch die im Betrieb auftretende Fliehkraft in axialer Richtung zu dem Ringkanal 13 transportiert wird.

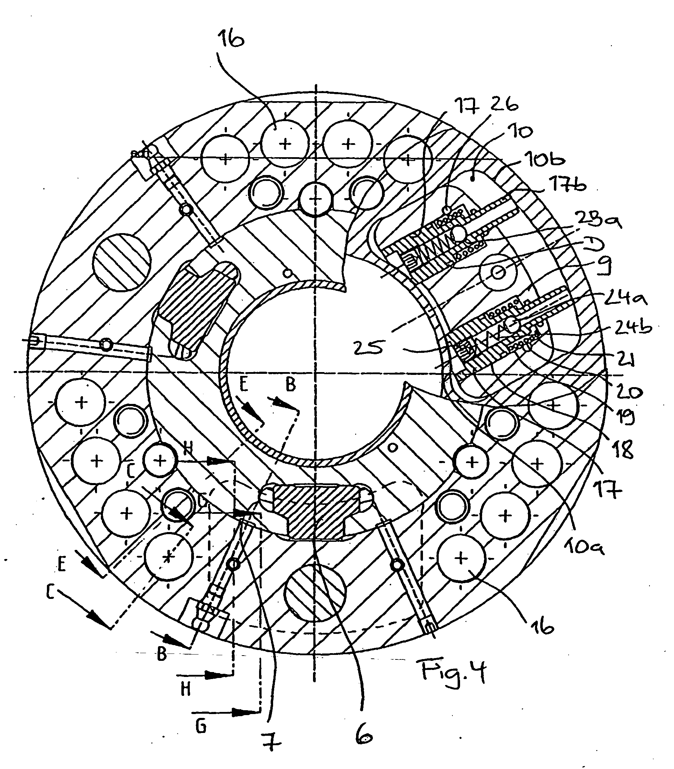

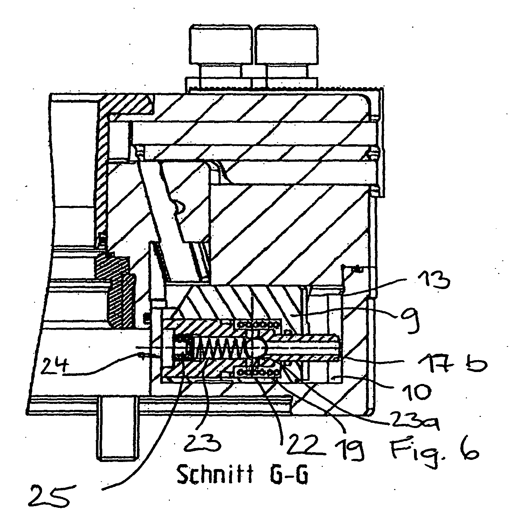

Um das Schmierfett, welches sich in den Taschen 10 befindet und im Betrieb durch die auftretenden Fliehkräfte auch von den radial innen gelegenen Führungsflächen in die Taschen 10 hineingedrückt wird, insbesondere an die Gleitflächen 7 zwischen Futterkolben 4 und Spannbacken 3 zu fördern, sind den Fliehkraft-Ausgleichsgewichten 9 jeweils zwei Pumpsysteme zugeordnet. Diese Pumpsysteme besitzen jeweils einen Pumpkolben 17, der in einer radialen Zylinderbohrung 18 des Fliehkraft-Ausgleichsgewicht 9 unter Bildung eines dazwischenliegenden Kolbenraums 19 radial verschiebbar angeordnet ist und durch eine Schraubendruckfeder 20, welche in dem Kolbenraum 19 angeordnet ist und sich zwischen dem Pumpkolben 17 und einem Absatz 21 des Fliehkraft-Ausgleichsgewichts 9 abstützt, gegen die Innenwandung 10a der Tasche 10 gedrückt wird. Der Pumpkolben 17 durchgreift mit seinem radial äußeren Endabschnitt 17b das Fliehkraft-Ausgleichsgewicht 9 und liegt, wie insbesondere die Figur 4 und die Figur 6 gut erkennen lassen, an der radialen Außenwandung 10b der Tasche 10 an. Der Pumpkolben 17 ist dabei rohrförmig ausgebildet, so dass der in die Tasche 10 hineinragende Endabschnitt 17b einen Ansaugstutzen bildet, durch welchen Schmiermittel aus der Tasche 10 über Verbindungskanäle 22 in den Kolbenraum 19 gelangen kann. Dabei gewährleistet die zylinderabschnittförmige Kontur der Außenwandung 10b der Tasche 10, dass stets ein Spalt zwischen dem Endabschnitt 17b des Pumpkolbens 17 und der Taschenwandung 10b vorhanden ist.

Die Figur 6 lässt deutlich erkennen, dass die Bohrung 23 innerhalb des Pumpkolbens 17 mit dem Kolbenraum 19 durch zwei radial in dem Pumpkolben 17 verlaufende Verbindungskanäle 22 verbunden ist, wobei in dem Pumpkolben 17 ein erstes Rückschlagventil 24 vorgesehen ist, welches ein Fluidstrom von der Tasche 10 in den Kolbenraum 19 zulässt, einen Fluidstrom in umgekehrter Richtung jedoch sperrt. Das erste Rückschlagventil 24 wird hier von einer Kugel 24a gebildet, welche durch eine Schraubendruckfeder 24b gegen einen Absatz 23a der Bohrung 23, welcher als Ventilsitz ausgebildet ist, gedrückt wird. Die Schraubendruckfeder 24b stützt sich dabei an ihrem radial nach innen weisenden Ende an einem Gewindestift 25 ab, der in die Bohrung 23 eingeschraubt ist.

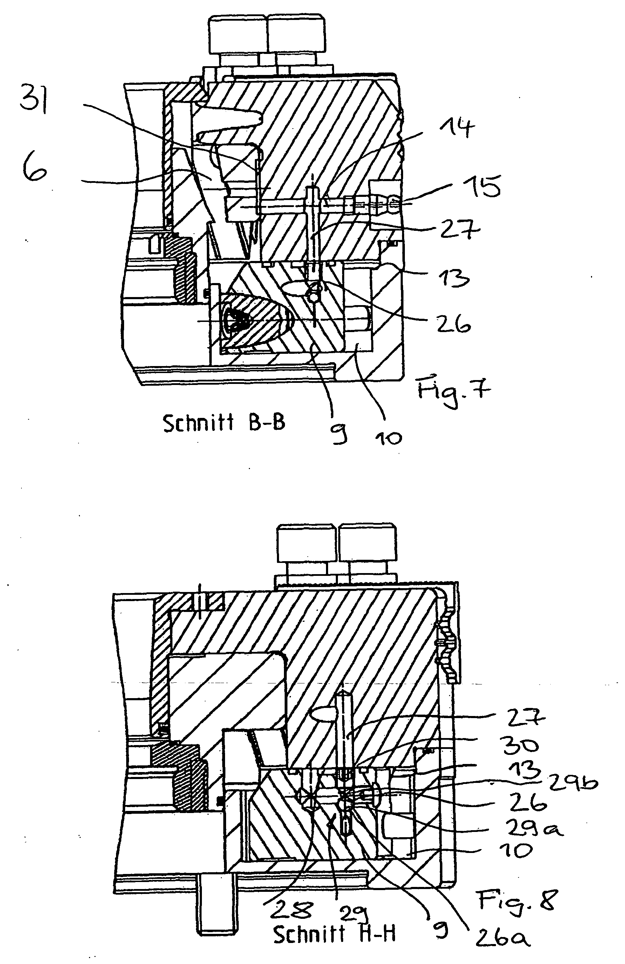

Die Figuren 4, 7 und 8 lassen in Zusammenschau gut erkennen, dass der Kolbenraum 19 über einen Auslasskanal 26, welcher tangential an den Kolbenraum 19 anschließt, mit einer Schmierbohrung 27 des Futterkörpers 1 verbunden ist. Konkret mündet der Auslaßkanal 26 in eine radiale Übergabenut 28, die an der Oberseite des Fliehkraft-Ausgleichsgewichts 9 derart ausgebildet ist, dass die vertikale Schmierbohrung 27 unabhängig von der Stellung des Fliehkraft-Ausgleichsgewichts 9 stets in Fluidverbindung mit der Übergabenut 28 steht. An die Schmierbohrung 27 ist über einen Versorgungskanal 14 ein Schmiernippel 15 angeschlossen, über welchen ein geeignetes Schmierfett zugeführt werden kann.

In dem Auslasskanal 26 des Fliehkraft-Ausgleichsgewichts 10 ist ein zweites Rückschlagventil 29 ausgebildet, das in gleicher Weise wie das erste Rückschlagventil 24 durch eine Kugel 29a gebildet wird, welche durch eine Schraubendruckfeder 29b gegen einen Sitz 26a gedrückt wird und sich an ihrem einen Ende an einem Gewindestift 30, der in den Auslasskanal 26 eingeschraubt ist, abstützt. Das zweite Rückschlagventil 29 erlaubt einen Fluidstrom von dem Kolbenraum 19 zur Übergabenut 28, verhindert jedoch einen Strom in entgegengesetzter Richtung.

Die Schmierbohrung 27 des Futterkörpers 1 mündet in den radialen Innenbereich des Futterkörpers 1 in der Nähe der Keilhaken 6, über welche die Spannbacken 3 mit dem kraftbetätigten Kolben 4 gekoppelt sind. Dabei ist in dem Kolben 4 eine Übergabenut 31 vorgesehen, welche sicherstellt, dass die Schmierbohrung 27 mit der Übergabenut 31 unabhängig von der Kolbenstellung in Verbindung steht.

Wenn die Spannbacken 3 nach innen bewegt werden, führt dies dazu, dass sich die Fliehkraft-Ausgleichsgewichte 9 in den Taschen 10 radial nach außen bewegen. Dies hat zur Folge, dass sich der radial äußere Bereich der Taschen 10 verkleinert und das in den Taschen 10 vorhandene Schmierfett aus den Taschen 10 herausgedrückt wird, wobei ein Teil in die Pumpkolben 17 hineingedrückt wird. Gleichzeitig vergrößern sich die Kolbenräume 19, wenn die Fliehkraft-Ausgleichsgewichte 9 relativ zu den Pumpkolben 17 nach außen bewegt werden, mit der Folge, dass in den Kolbenräumen 19 ein Unterdruck entsteht und somit Schmiermittel aus den Taschen 10 angesaugt wird. Dabei verhindern die zweiten Rückschlagventile 29, dass auch Fluid aus den Schmierbohrungen 27 in die Kolbenräume 19 gesaugt wird.

Wenn die Spannbacken 3 zu einem späteren Zeitpunkt wieder auseinander bewegt werden, verkleinern sich die Kolbenräume 19 mit der Folge, dass das in den Kolbenräumen 19 befindliche Schmiermittel über die zweiten Rückschlagventile 29 zu den Schmierbohrungen 27 in dem Futterkörper 1 und von dort aus zu den zu schmierenden Keilhaken 6 gefördert wird. Dabei verhindern die ersten Rückschlagventile 24 ein Zurückströmen von Schmiermittel aus den Kolbenräumen 19 in die Taschen 10.

In der Praxis hat sich gezeigt, dass durch die im Betrieb auftretenden Fliehkräfte in den Schmiermittel-Reservoirbohrungen 16 eine zentrifugale Auftrennung des Schmiermittels in seine Mineralöl- und Zusatzstoff-Phasen stattfinden kann. Um dies zu verhindern, ist in die Schmiermittel-Reservoirbohrungen 16 jeweils ein Rührkörper in der Form einer Schraubendruckfeder 33 eingesetzt, wie dies in den Figuren 5a bis 5c gezeigt ist. Bei der in der Figur 5a dargestellten Ausführungsvariante ist die Schraubendruckfeder 33 mit geringer Vorspannung in die Schmiermittel-Reesrvoirbohrung 16 eingesetzt, wobei sie mit ihren abgeflachten Endwindungen an flachen Endflächen 16b der Schmiermittel-Reservoirbohrung 16 in Anlage kommen. Die Länge der Schraubendruckfeder 33 ist dabei so bemessen, dass die Schraubendruckfeder 33 bei der Montage nur geringfügig zusammengestaucht wird, um eine freie Bewegung der Schraubendruckfeder 33 innerhalb der Schmiermittel-Reservoirbohrung 16 nicht zu beeinträchtigen. Des weiteren ist auch der Durchmesser der Schraubendruckfeder 33 deutlich - hier um etwa 25% - kleiner als der Durchmesser der Schmiermittel-Reservoirbohrung 16 gewählt, so dass auch gewährleistet ist, dass sich die Schraubendruckfeder 33 in der Querrichtung der Schmiermittel-Reservoirbohrung 16 frei bewegen kann. Unter den im Betrieb auftretenden Fliehkräften wandert die Mittelachse der Schraubendruckfeder 33 nach außen und kehrt nach Abklingen der Fliehkraft wieder in ihre Ausgangslage zurück. Dabei sorgt die Schraubendruckfeder 33 mit ihrer Vielzahl von Windungen in der gesamten axialen Erstrekkung der Schraubendruckfeder 33 für eine Durchmischung des Schmiermittels.

Die in der Figur 5b dargestellte Ausführungsform entspricht im wesentlichen der in Figur 5a dargestellten Ausführungsform mit der Maßgabe, dass an den axialen Enden der Schmiermittel-Reservoirbohrungen 16 jeweils ein Führungsdorn 16c vorgesehen ist, auf welchen die Schraubendruckfeder 33 aufgesetzt ist. In diesem Fall liegen die Achsen der Schraubendruckfeder 33 und der Schmiermittel-Reservoirbohrung 16 deckungsgleich. Durch die im Betrieb auftretenden Fliehkräfte wird die Schraubendruckfeder 33 bauchförmig nach außen gewölbt und nach Abklingen der Fliehkräfte nimmt diese Wölbung wieder ab, wodurch der Durchmischungseffekt erzielt wird.

Die Figur 5c zeigt schließlich eine Ausführungsform, bei welcher die Schmiermittel-Reservoirbohrung 16 an ihren gegenüber liegenden Enden Konusflächen 16b aufweist, an welchen sich die Schraubendruckfeder 33 abstützt. Die Funktionsweise ist die gleiche wie bei der in der Figur 5a dargestellten und zuvor beschriebenen Ausführungsform.

Schließlich können die Schraubendruckfedern 33 in die Schmiermittel-Reservoirbohrungen 16 auch ohne axiale Vorspannung eingesetzt sein. Hierzu wird die Länge der Schraubendruckfeder 33 so gewählt, dass sie im ungespannten Zustand geringer als die Länge der Schmiermittel-Reservoirbohrung 16 ist. Bei dieser Ausführungsform wälzt sich die Schraubendruckfeder 33 bei den im normalen Betrieb des Spannfutters auftretenden Beschleunigungs- und Verzögerungsvorgängen in tangentialer Richtung innerhalb der Schmiermittel-Reservoirbohrung 16 ab und sorgt bei ihrer Vielzahl von Windungen in der gesamten axialen Erstreckung der Schraubenfeder für eine Durchmischung des Schmiermittels. Dadurch, dass die radialen Außenwandungen 16a jeweils zu dem Ringkanal 13 nach außen hin geneigt sind, besitzt die Schraubendruckfeder 33 weiterhin die Möglichkeit, sich an den geneigten Außenwandungen 16a anzulegen. Beim Abklingen der Fliehkraft kehrt die Schraubendruckfeder 33 in ihre unverformte Gestalt zurück und sorgt mit dieser Bewegung ebenfalls für eine Durchmischung des Schmiermittels.

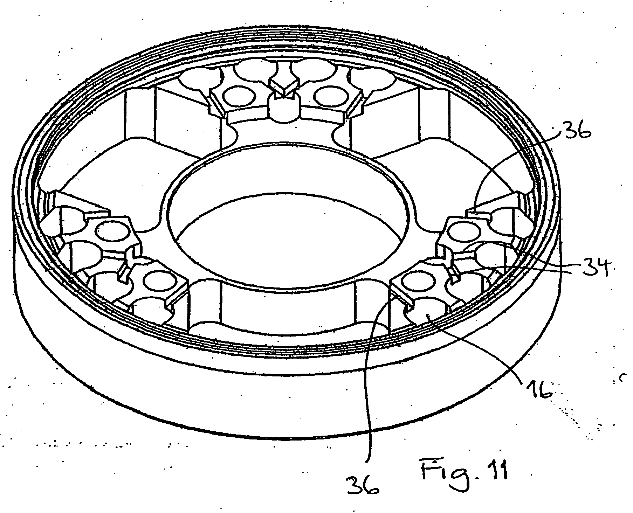

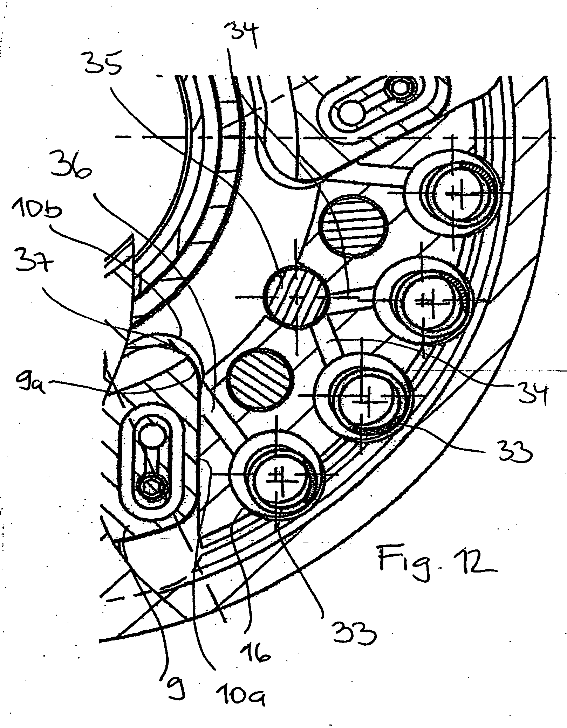

Die Figuren 5, 11 und 12 lassen in Zusammenschau weiterhin erkennen, dass die Schmiermittel-Reservoirbohrungen 16 über Schmiermittelkanäle 34 mit dem radial inneren Bereich des Spannfutters, welcher über das Schmiersystem über die Taschen 10 mit einem Schmiermittel versorgt wird, verbunden ist. Über diese Schmiermittelkanäle 34 kann Schmiermittel, welches sich an den radial inneren Bereichen des Spannfutters sammelt, in die Schmiermittel-Reservoirbohrungen 16 zurückgelangen. Hierdurch wird ein geschlossener Schmierkreislauf erhalten. Des weiteren wird eine bessere Durchmischung des Schmiermittels erreicht, da alle Bereiche, in denen sich Fett befindet, miteinander verbunden sind und am Schmierkreislauf teilnehmen können. Bei der dargestellten Ausführungsform münden die Schmiermittelkanäle 34 an ihren radial inneren Enden aus konstruktiven Gründen in den Bereich von Befestigungsschrauben 35, um welche das Schmiermittel herum fließen kann.

Schließlich sind Schmiermittelkanäle 36 vorgesehen, welche die radial inneren Bereiche der Taschen mit Schmiermittel-Reservoirbohrungen verbinden. Die Anordnung ist dabei so getroffen, dass die Schmiermittelkanäle 36 in die seitlichen Wandungen 10a der Taschen 10 münden, an denen die Fliehkraft-Ausgleichsgewichte 9 geführt sind, wobei die Fliehkraft-Ausgleichsgewichte 9 und die Taschen 10 so ausgebildet sind, dass sie einen zur Öffnung des Schmiermittelkanals zulaufenden Führungsspalt 37 bilden. Die Lage der Mündung des Schmiermittelkanals 36 ist so konzipiert, dass Schmiermittel, das auf die Rundung 9a des Fliehkraft-Ausgleichsgewichtes 9 trifft, an der Rundung 9a entlang in die Mündung geleitet wird. Da sich der zwischen der Rundung 9a des Fliehkraft-Ausgleichsgewichts 9 und der Rundung 10b der Tasche 10 bildende sichelförmige Hohlraum oder Führungsspalt 37 über die volle Höhe des Fliehkraft-Aus-gleichsgewichtes 10 erstreckt, kann er sich mit Schmiermittel füllen. Dieses Schmiermittel kann über den Schmiermittelkanal 36 in die Schmiermittel-Reservoirbohrung 16 oder über Fasen, welche an der Ober- und Unterseite des Fliehkraft-Ausgleichsgewichtes 9 vorgesehen sind, in den Ansaugbereich der Schmiermittelpumpe abfließen.

## Patentansprüche

1. Spannfutter mit einem Futterkörper (1) und Spannbakken (3), die in radialen Backenführungen (2) des Futterkörpers (1) verstellbar angeordnet sind, wobei in dem Futterkörper (1) Taschen (10) ausgebildet sind, in denen Förderelemente (9) radial bewegbar geführt sind, und Mittel vorgesehen sind, um Schmiermittel, das sich in den Taschen (10) sammelt, durch die Radialbewegung der Förderelemente (9) in Schmierbohrungen (27) und über diese zu gewünschten Schmierstellen zu pumpen, wobei in dem Futterkörper (1) Schmiermittel-Reservoirbohrungen (16) ausgebildet sind, die insbesondere in Futterachsrichtung verlaufen mit den Taschen (10) verbunden sind, **dadurch gekennzeichnet, dass** in den Schmiermittel-Reservoirbohrungen (16) jeweils wenigstens ein Rührkörper (33) untergebracht ist, welcher derart angeordnet und/oder ausgebildet ist, dass er während des Betriebs Bewegungen ausführt, um das in der jeweiligen Schmiermittel-Reservoirbohrung (16) enthaltene Schmiermittel umzurühren.

2. Spannfutter nach Anspruch 1, **dadurch gekennzeichnet, dass** der Rührkörper als eine in die Schmiermittel-Reservoirbohrung (16) eingesetzte Schraubenfeder (33) ausgebildet ist.

3. Spannfutter nach Anspruch 2, **dadurch gekennzeichnet, dass** der Außendurchmesser der Schraubenfeder (33) kleiner, insbesondere um ca. 25% kleiner als der Durchmesser der Schmiermittel-Reservoirbohrung (16) ist.

4. Spannfutter nach Anspruch 2 oder 3, **dadurch gekennzeichnet, dass** die Länge der Schraubenfeder (33) so bemessen ist, dass sie im ungespannten Zustand geringer als die Länge der Schmiermittel-Reservoirbohrung (16) ist, so dass sich die Schraubenfeder (33) innerhalb der Schmiermittel-Reservoirbohrung (16) frei bewegen kann.

5. Spannfutter nach Anspruch 2 oder 3, **dadurch gekennzeichnet, dass** die Länge der Schraubenfeder (33) minimal größer als die Länge der Schmiermittel-Reservoirbohrung (16) ist, so dass die Schraubenfeder (33) bei der Montage nur geringfügig zusammengestaucht wird.

6. Spannfutter nach einem der Ansprüche 2 bis 5, **dadurch gekennzeichnet, dass** die Schmiermittel-Reservoirbohrung (16) an ihrem oberen und/oder unteren Ende eine ebene Fläche (16b) besitzt, an der sich die Schraubenfeder (33) abstützt.

7. Spannfutter nach Anspruch 6, **dadurch gekennzeichnet, dass** an den axialen Enden der Schmiermittel-Reservoirbohrungen (16) jeweils ein Führungsdorn (16c) vorgesehen ist, auf welchen die Schraubenfeder (33) aufgesetzt ist.

8. Spannfutter nach Anspruch 5, **dadurch gekennzeichnet, dass** die Schmiermittel-Reservoirbohrung (16) an ihren gegenüberliegenden Enden Konusflächen (16d) aufweist, an welchen sich die Schraubenfeder (33) abstützt.

9. Spannfutter nach Anspruch 1, **dadurch gekennzeichnet, dass** der Rührkörper durch wenigstens eine in die Schmiermittel-Reservoirbohrung (16) eingesetzte Stahlkugel gebildet ist, die einen kleineren Durchmesser als die Schmiermittel-Reservoirbohrung (16) besitzt.

10. Spannfutter nach Anspruch 1, **dadurch gekennzeichnet, dass** der Rührkörper als ein Zylinderstift ausgebildet ist, der sich im wesentlichen über die gesamte Länge der Schmiermittel-Reservoirbohrung (16) erstreckt.

11. Spannfutter rückbezogen nach einem der vorhergehenden Ansprüche, **dadurch gekennzeichnet, dass** die Schmiermittel-Reservoirbohrungen (16) in ihrem radial äußeren Bereich geneigte Außenflächen (16a) aufweisen.

12. Spannfutter rückbezogen nach einem der vorherigen Ansprüche, **dadurch gekennzeichnet, dass** die Taschen (10) und die Schmiermittel-Reservoirbohrungen (16) über einen umlaufenden Ringkanal (13) miteinander in Verbindung stehen.

13. Spannfutter nach Anspruch 13, **dadurch gekennzeichnet, dass** Schmiermittelkanäle (34) vorgesehen sind, welche eine zentrale Aufnahme des Spannfutters mit den Schmiermittel-Reservoirbohrungen (16) verbinden.

14. Spannfutter nach einem der vorherigen Ansprüche, **dadurch gekennzeichnet, dass** die radial inneren Bereiche der Taschen (10) über Schmiermittelkanäle (36) mit den Schmiermittelreservoirbohrungen (16) verbunden sind, so dass im Betrieb Schmiermittel, welches sich in den radial inneren Bereichen der Taschen (10) sammelt, durch die auftretenden Fliehkräfte über die Schmiermittelkanäle in die Schmiermittel-Reservoirbohrungen (16) zurückgeführt werden kann.

15. Spannfutter nach Anspruch 14 oder 15, **dadurch gekennzeichnet, dass** Schmiermittelkanäle (36) in die seitlichen Wandungen (10a) der Taschen (10), an denen die Förderelemente (9) geführt sind, münden, wobei die Förderelemente (9) und die Taschen (10) insbesondere so ausgebildet sind, dass sie einen zur Öffnung des Schmiermittelkanals zulaufenden Führungsspalt (37) bilden.

16. Spannfutter nach einem der vorherigen Ansprüche, **dadurch gekennzeichnet, dass** die Förderelemente (9) als Fliehkraft-Ausgleichsgewichte ausgebildet sind, die jeweils über einen Hebel mit einer Spannbacke (3) gekoppelt sind.

## Claims

1. A chuck with a chuck body (1) and clamping jaws (3) which are adjustably disposed in radial jaw guides (2) of the chuck body (1), pockets (10) being formed in the chuck body (1) in which conveying elements (9) are guided moveably in a radial direction, and means are provided in order to pump lubricant which collects in the pockets (10) by means of the radial movement of the conveying elements (9) into lubrication bores (27) and via the latter to desired lubrication points, lubricant reservoir bores (16) being formed in the chuck body (1) which in particular extending in the axial direction of the chuck are connected to the pockets (10), **characterised in that** at least one agitating body (33) is accommodated respectively in the lubricant reservoir bores (16) which is positioned and/or designed such that during operation it executes movements in order to agitate the lubricant contained within the respective lubricant reservoir bore (16).

2. The chuck according to Claim 1, **characterised in that** the agitating body is in the form of a helical spring (33) inserted into the lubricant reservoir bore (16).

3. The chuck according to Claim 2, **characterised in that** the outer diameter of the helical spring (33) is smaller, in particular approximately 25% smaller, than the diameter of the lubricant reservoir bore (16).

4. The chuck according to Claim 2 or 3, **characterised in that** the length of the helical spring (33) is dimensioned such that in the non-tensioned state it is smaller than the length of the lubricant reservoir bore (16) so that the helical spring (33) can move freely within the lubricant reservoir bore (16).

5. The chuck according to Claim 2 or 3, **characterised in that** the length of the helical spring (33) is minimally greater than the length of the lubricant reservoir bore (16) so that the helical spring (33) is only slightly compressed when being set up.

6. The chuck according to any of Claims 2 to 5, **characterised in that** at its upper and/or lower end the lubricant reservoir bore (16) has a level surface (16b) on which the helical spring (33) is supported.

7. The chuck according to Claim 6, **characterised in that** at the axial ends of the lubricant reservoir bores (16) a guiding spike (16c) is respectively provided over which the helical spring (33) is placed.

8. The chuck according to Claim 5, **characterised in that** the lubricant reservoir bore (16) has on its opposite ends conical surfaces (16d) on which the helical spring (33) is supported.

9. The chuck according to Claim 1, **characterised in that** the agitating body is formed by at least one steel ball inserted into the lubricant reservoir bore (16) which has a smaller diameter than the lubricant reservoir bore (16).

10. The chuck according to Claim 1, **characterised in that** the agitating body is in the form of a cylinder pin which extends substantially over the whole length of the lubricant reservoir bore (16).

11. The chuck referring back to any of the preceding claims, **characterised in that** the lubricant reservoir bores (16) have inclined outer surfaces (16a) in their radially outer region.

12. The chuck referring back to any of the preceding claims, **characterised in that** the pockets (10) and the lubricant reservoir bores (16) are connected to one another by a circumferential annular channel (13).

13. The chuck according to Claim 13, **characterised in that** lubricant channels (34) are provided which connect a central receptacle of the chuck to the lubricant reservoir bores (16).

14. The chuck according to any of the preceding claims**, characterised in that** the radially inner regions of the pockets (10) are connected to the lubricant reservoir bores (16) by lubricant channels (36) so that during operation, lubricant which collects in the radially inner regions of the pockets (10) can be conveyed back into the lubricant reservoir bores (16) via the lubricant channels by means of the centrifugal forces that occur.

15. The chuck according to Claim 14 or 15, **characterised in that** lubricant channels (36) open out into the side walls (10a) of the pockets (10) on which the conveying elements (9) are directed, the conveying elements (9) and the pockets (10) being designed in particular such that they form a guide gap (37) running to the opening of the lubricant channel.

16. The chuck according to any of the preceding claims, **characterised in that** the conveying elements (9) are in the form of centrifugal force counterweights which are respectively coupled to a clamping jaw by a lever.

## Revendications

1. Mandrin de serrage avec corps de mandrin (1) et mâchoires (3), qui sont montées de manière réglable dans le guidage des mâchoires radiales (2) du corps de mandrin (1), où des poches sont conçues dans le corps de mandrin (1), dans lesquelles des éléments roulants (9) coulissent radialement et, des moyens sont prévus pour pomper le lubrifiant, celui-ci étant recueilli dans les poches (10), par le mouvement radial des éléments roulants (9) dans les orifices de graissage (27) et sur les parties que l'on souhaite graisser; dans le corps de mandrin (1) des orifices de réservoir à lubrifiant (16) sont conçues, passant notamment dans le sens de l'axe du mandrin et étant reliés aux poches (10), **caractérisé en ce que** dans les orifices de réservoir à lubrifiant (16) chaque fois au moins un agitateur (33) est installé, lequel est monté et/ou conçu, de façon à ce qu'il effectue des mouvements durant son utilisation, afin d'agiter le lubrifiant contenu dans chaque orifice de réservoir à lubrifiant (16).

2. Mandrin de serrage selon revendication 1, **caractérisé en ce que** l'agitateur est conçu comme un ressort en hélice (33) monté dans l'orifice du réservoir de lubrifiant (16).

3. Mandrin de serrage selon revendication 2, **caractérisé en ce que** le diamètre extérieur du ressort en hélice (33) est plus petit, notamment d'environ 25% plus petit que le diamètre de l'orifice du réservoir de lubrifiant (16).

4. Mandrin de serrage selon revendication 2 ou 3, **caractérisé en ce que** la longueur du ressort en hélice (33) est réglée de façon à ce que, en position tendue elle soit plus petite que la longueur de l'orifice du réservoir de lubrifiant (16), et qu'ainsi le ressort en hélice (33) puisse se déplacer librement à l'intérieur de l'orifice du réservoir de lubrifiant (16).

5. Mandrin de serrage selon revendication 2 ou 3, **caractérisé en ce que** la longueur du ressort en hélice (33) est au minimum plus grosse que la longueur de l'orifice du réservoir de lubrifiant (16), et qu'ainsi le ressort en hélice (33) ne soit que faiblement compressé lors du montage.

6. Mandrin de serrage selon revendications 2 à 5, **caractérisé en ce que** l'orifice du réservoir de lubrifiant (16) ait une surface plane (16b) à son extrémité supérieure et/ou inférieure, sur lesquelles le ressort en hélice (33) s'appuie.

7. Mandrin de serrage selon revendication 6, **caractérisé en ce que** sur les extrémités axiales de l'orifice du réservoir de lubrifiant (16) à chaque fois une aiguille de guidage (16c) est prévue, et sur laquelle le ressort en hélice (33) est placé.

8. Mandrin de serrage selon revendication 5, **caractérisé en ce que** l'orifice du réservoir de lubrifiant (16) présente, en ses extrémités opposées, des surfaces coniques (16d) sur lesquelles le ressort en hélice (33) s'appuie.

9. Mandrin de serrage selon revendication 1, **caractérisé en ce que** l'agitateur est formé par au moins une bille d'acier montée dans l'orifice du réservoir de lubrifiant (16), celle-ci ayant un plus petit diamètre que l'orifice du réservoir de lubrifiant (16).

10. Mandrin de serrage selon revendication 1, **caractérisé en ce que** l'agitateur est conçu comme une goupille cylindrique, qui s'étend essentiellement sur toute la longueur de l'orifice du réservoir de lubrifiant (16).

11. Mandrin de serrage se rattachant à l'une des revendications précédentes, **caractérisé en ce que** les orifices du réservoir de lubrifiant (16) présentent des surfaces extérieures inclinées (16a) sur sa partie extérieure radiale.

12. Mandrin de serrage se rattachant à une des revendications précédentes, **caractérisé en ce que** les poches (10) et les orifices du réservoir de lubrifiant (16) sont connectés l'un à l'autre par un canal de ceinture entourant (13).

13. Mandrin de serrage selon revendication 13, **caractérisé en ce que** les canaux de lubrifiant (34) sont prévus, lesquels relient une admission centrale du mandrin de serrage aux orifices du réservoir de lubrifiant (16).

14. Mandrin de serrage selon une des revendications précédentes, **caractérisé en ce que** les zones intérieures radiales des poches (10) sont reliées par des canaux de lubrifiant (36) aux orifices du réservoir de lubrifiant (16), et qu'ainsi durant le fonctionnement, le lubrifiant étant recueilli dans les zones intérieures radiales des poches (10), puisse être reconduit par les forces centrifuges sur les canaux de lubrifiant dans les orifices du réservoir de lubrifiant (16).

15. Mandrin de serrage selon revendication 14 ou 15, **caractérisé en ce que** les canaux de lubrifiant (36) débouchent dans les parois latérales (10a) des poches (10), vers lesquelles les éléments roulants (9) sont conduits, où les éléments roulants (9) et les poches (10) sont notamment ainsi conçus, qu'ils forment une fente de guidage en arrivée (37) pour l'ouverture du canal de lubrifiant.

16. Mandrin de serrage selon une des revendications précédentes, **caractérisé en ce que** les éléments roulants (9) sont conçus comme force centrifuge-équilibre, ceux-ci étant à chaque fois liés par un levier à une mâchoire d'étau (3).
